# EUROPÄISCHE PATENTANMELDUNG

(11) **EP 3 263 218 A1**
(43) Veröffentlichungstag der Anmeldung: **03.01.2018**
(21) Anmeldenummer: 17001086.2
(22) Anmeldetag: 27.06.2017
(51) Int. Cl.: B01L 3/00, F16K 99/00

(54) **MIKROFLUIDIKCHIP MIT EINEM FUNKTIONELLEN BEREICH, DER MIT EINEM FLEXIBLEN ODER VERFORMBAREN DECKEL ABGEDECKT IST, UND MIKROFLUIDIKSYSTEM**

(30) Priorität: 27.06.2016 DE 102016007747; 25.11.2016 DE 102016014056
(71) Anmelder: M2p-labs GmbH, 52499 Baesweiler (DE)
(72) Erfinder: Müller, Carsten, 52134 Herzogenrath (DE); Frische, Niklas, 52511 Geilenkirchen (DE); Kress, Anna, 52070 Aachen (DE); Meinen, Thomas, 82049 Pullach i. Isartal (DE)
(74) Vertreter: Castell, Klaus

(57) **Zusammenfassung**

Ein Mikrofluidikchip mit einem funktionellen Bereich, der mit einem flexiblen oder verformbaren Deckel abgedeckt ist, zeichnet sich dadurch aus, dass der Deckel einen Ausdehnungsbegrenzer aufweist. Dieser Ausdehnungsbegrenzer kann beispielsweise als stabile Platte mit einer oder mehreren Öffnungen ausgebildet sein.

## Beschreibung

Die Erfindung betrifft einen Mikrofluidikchip mit einem funktionellen Bereich, der mit einem flexiblen oder verformbaren Deckel abgedeckt ist.

Unter der Bezeichnung "Lab-on-a-Chip" wird das Konzept der Miniaturisierung auf chemische und biologische Verfahren angewandt. Lab-on-a-Chip bedeutet, teure und aufwändige Laborverfahren in einem integrierten Chipsystem zu implementieren und damit der Biotechnologie, der analytischen, pharmazeutischen und klinischen Chemie, der Umweltanalytik, der Lebensmittelchemie usw. neuartige Werkzeuge bereitzustellen, die die Limitierungen stationärer Labors überwinden.

Technische Grundlage für die Miniaturisierung von Laborverfahren zu Lab-on-Chip-Systemen ist die Mikrofluidik. Mit "Lab-on-Chip" wird somit ein mikrofluidisches System gekennzeichnet, das die gesamte Funktionalität eines makroskopischen Labors auf einer kleinen, nicht mehr als handtellergroßen Fläche vereinigt.

Um insbesondere den bei der zunehmenden industriellen Anwendung der Mikrofluidik dominierenden Anforderungen an Menge, Durchsatz und Produktivität zu genügen, betrifft die Erfindung insbesondere mikrofluidische Systeme mit polymeren Werkstoffen. Diese lassen sich mit Standardreplikationsverfahren wie Mikrospritzguss oder Heißprägen einfach verarbeiten und erlauben eine gut skalierbare und kosteneffiziente Produktion von mikrofluidischen Komponenten. Daneben sprechen für die Verwendung polymerer Materialien auch die geringere Prozesskomplexität bei der Bauteilherstellung sowie größere Freiheiten bezüglich des Designs. Auf dem Markt sind heute eine Vielzahl von Polymeren verfügbar, die sich aufgrund ihrer qualitativen Eigenschaften wie hoher Reinheit, optischer Transparenz, Biokompatibilität, chemische Resistenz usw. prinzipiell für den breiten Einsatz in industriellen mikrofluidischen Anwendungen eignen und den unterschiedlichsten Anforderungen dort gerecht werden.

Weiterhin betrifft die Erfindung vor allem Systeme, die es ermöglichen, sehr viele mikrofluidische Prozesse gleichzeitig kontrolliert ablaufen zu lassen, z.B. paralleles Hochdurchsatzscreening, Hochskalierung durch Parallelproduktion.. Parallelisierung ist mit hohen Anforderungen an die funktionale Qualität von mikrofluidischen Systemen verbunden, die sich im Betrieb hinsichtlich der Prozessverhältnisse, wie Druck, Temperatur, Massendurchfluss usw. und Betriebssicherheit nicht unterscheiden dürfen.

Dem Verschluss der nach dem Spritzguss- oder Prägeprozess noch offenen funktionstragenden Strukturen im Polymerkörper gegenüber der Außenwelt und der flüssigkeitsdichten Versiegelung der fluidischen Systemkomponenten (z.B. Mikrokanäle) zueinander kommt entscheidende Bedeutung hinsichtlich der praktischen Anwendungstauglichkeit zu.

Dieser auch als "Deckelung" bezeichnete Vorgang erfolgt in der Regel durch dünne Polymerfolien, die Deckelungsfolien, die mit unterschiedlichen Fügeverfahren, wie beispielsweise Kaschieren, Laminieren, Kleben, Schweißen auf die Oberfläche aufgebracht werden und mit dem strukturierten Polymerkörper, dem Boden, einen Sandwichverbund, den Mikrofluidikchip, bilden. Wichtigstes Ziel dabei ist die Herstellung einer stofflichen Verbindung zwischen Boden und Deckelungsfolie, die gleichermaßen Dicht- und Verbindungsfunktion erfüllen muss.

In der Anwendung kann sich die Elastizität bzw. Weichheit der Deckelungsfolie nachteilig auswirken, da sie bei intern oder extern induzierten positiven oder negativen Druckänderungen nachgeben, sich ausdehnen oder einsinken kann. Dies hat unerwünschte Volumenänderungen im fluidischen System zur Folge. Besonders kritisch ist auch das damit verbundene Risiko einer Beschädigung des Materialverbunds, das sich typischerweise in Form von partiellen Ablösungen/Abhebungen der Deckelungsfolie an den Rändern der mikrofluidischen Strukturen zeigt und zu undefinierten Veränderungen des Füllvolumens bzw. einer Undichtheit im fluidischen System führen kann.

Die Elastizität der Deckelungsfolien ist allerdings nicht in jedem Fall unerwünscht, sondern kann auch gezielt nutzbar gemacht werden. Wenn es um die aktive Steuerung des Liquidtransports in mikrofluidischen Systemen geht, lassen sich die Deckelungsfolien partiell als elastische Membranen für aktive Komponenten wie Ventile, Pumpen oder andere Funktionselemente ausbilden, die zum Beispiel durch eine von außen wirkende Pneumatik Hubbewegungen zur Verdrängung und Mobilisierung von Flüssigkeit oder zum Öffnen und Verschließen von Kanälen zur Steuerung von Flüssigkeitsströmen im mikrofluidischen System ausführen können.

Werden Teilflächen der Deckelungsfolien als aktiv bewegte Membranen zu Steuerungszwecken genutzt, ist aufgrund der zusätzlichen mechanischen Beanspruchung dort natürlich besonders auf einen entsprechend belastbaren Materialverbund zu achten, um die mit der oben angesprochenen möglichen Ablösung der Deckelungsfolie verbundenen Probleme zu vermeiden. Die hier beschriebenen Anforderungen stellen eine große Herausforderung für die Aufbau- und Verbindungstechnik dar, da einerseits der Fügeprozess sehr behutsam geführt werden muss, um die empfindlichen mikrofluidischen Strukturen bzw. funktionstragenden Materialien nicht zu beschädigen und andererseits eine hohe Qualität der Verbindung sicherzustellen ist.

Hinzu kommt als weiteres Risiko, dass eine wiederholte Dehnung der Bereiche der Deckelungsfolie, die die aktiv bewegten elastischen Membranen bilden, zu einem Überschreiten der Fließgrenze und damit einer irreversiblen Verformung des Materials in Form einer Membranaussackung führen kann, die sich sowohl auf die volumetrische Genauigkeit als auch auf die korrekte Steuerfunktion negativ auswirkt.

Aus den Ausführungen an dieser Stelle werden die in der Praxis häufig kaum überbrückbaren Zielkonflikte deutlich, die entstehen, wenn es gilt, die konstruktiven und funktionalen Anforderungen mit den Eigenschaften der eingesetzten Materialien und den technischen Möglichkeiten der Aufbau- und Verbindungstechnik zur Deckung zu bringen.

Diese Aufgabe wird mit einem Mikrofluidikchip mit den Merkmalen des Patentanspruchs 1 und einem Mikrofluidiksystem mit den Merkmalen des Anspruchs 8 gelöst.

Gegenstand der Erfindung ist ein als Ausdehnungsbegrenzer bezeichnetes Bauteil, das eine unkontrollierte Ausdehnung von Deckelungsfolien bzw. Membranen verhindert und den Materialverbund zwischen Boden und Deckelungsfolie von Mikrofluidikchips mechanisch entlastet. Dieser Ausdehnungsbegrenzer kann die oben beschriebenen Probleme in vielen Anwendungen vollständig eliminieren.

Der Ausdehnungsbegrenzer sollte sich an den Deckelplan anlegen und er kann beispielsweise eine stabile Folie sein. Vorteilhaft ist es, wenn der Ausdehnungsbegrenzer eine stabile Platte mit einer oder mehreren Öffnungen ist.

Dieser Ausdehnungsbegrenzer kann auf den Deckel aufgelegt sein oder über ein weiteres Element auf den Deckel gedrückt werden. Vorteilhaft ist es jedoch, wenn der Ausdehnungsbegrenzer mit dem Deckel fest verbunden ist.

Hierzu wird vorgeschlagen, dass der Ausdehnungsbegrenzer am Deckel angeklebt ist. Er kann jedoch auch einstückig mit dem Deckel ausgeführt sein, indem der Deckel beispielsweise in den Bereichen außerhalb oder Öffnungen eine verstärkte Dicke aufweist.

Ein einfacher Aufbau sieht vor, dass der Deckel mit dem funktionellen Bereich fest verbunden ist. Hierzu kann der Deckel am funktionellen Bereich angeklebt sein.

Der Deckel kann eine Membran oder eine Folie sein oder er kann aus unterschiedlichen Elementen oder Bereichen ausgebildet sein, die eine Membran oder eine Folie oder mehrere Membranen und/oder mehrere Folien aufweist.

Eine spezielle Ausführungsform sieht vor, dass der Mikrofluidikchip unterschiedliche aktive und/oder passive funktionelle Bereiche aufweist, die jeweils von unterschiedlichen Deckeln abgedeckt sind.

Zur Ausbildung eines Mikrofluidikchipsystems wird vorgeschlagen, dass am Mikrofluidikchip ein Pneumatikdapter angeordnet ist. Dieser Pneumatikadapter weist Steuerungselemente auf, die auf einen funktionellen Bereich einwirken.

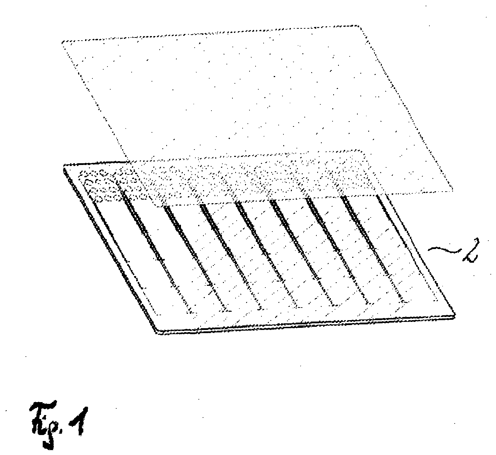

Im Folgenden wird die Erfindung mit Bezug auf die Zeichnung näher erläutert. Es zeigt
- Figur 1: einen Sandwichaufbau eines Mikrofluidikchips,
- Figur 2: den Aufbau einer mikrofluidischen Kultivierungsplattform,
- Figur 3: die in Figur 2 gezeigte Kultivierungsplattform in zusammengesetzter Form,
- Figur 4: die pneumatisch steuerbare Membranfläche mit einem vergrößerten Detail,
- Figur 5: einen Pneumatikadapter für die Membranbetätigung,
- Figur 6: einem Fluidikchip mit Ausdehnungsbegrenzer und
- Figur 7: eine vergrößerte Darstellung eines Ausdehnungsbegrenzers.

Die Funktionsweise wird an einem an eine Mikrotiterplatte 1 gefügten Mikrofluidikchip 2 erläutert. In Verbindung mit Steuerungselementen 9 eines entsprechenden Pneumatikadapters 16 stellt diese Kombination eine automatisierte Kultivierungsplattform dar.

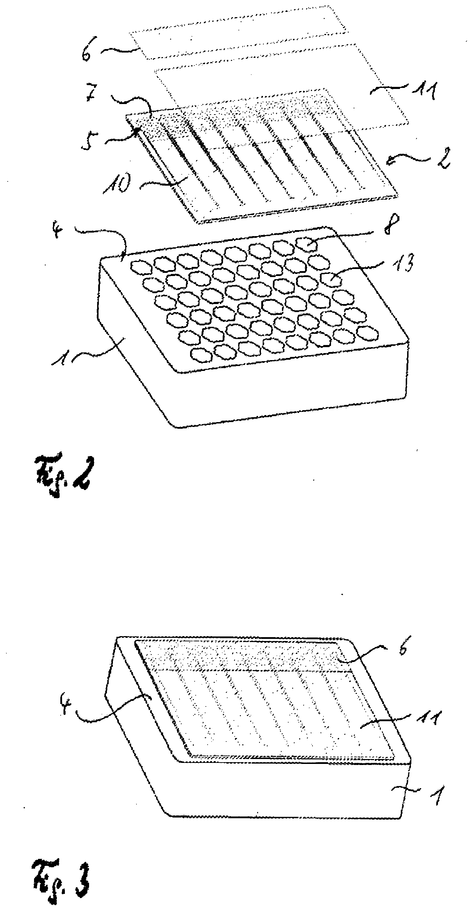

Die bevorzugte Ausführungsform besteht aus dem als Polymerkörper mit mikrofluidischen Strukturen ausgebildeten Mikrofluidikchip 2, der auf der Unterseite 4 der Mikrotiterplatte 1 befestigt ist und der zwei funktionale Bereiche umfasst: Ein schmaler funktioneller Bereich 5, der von dem als Deckelungsfolie 6ausgebildeten flexiblen oder verformbaren Deckel verschlossen wird, beinhaltet mikrofluidische Ventile 7 (nur exemplarisch beziffert) zur Steuerung der Fluidströme aus den darüber liegenden, in der Mikrotiterplatte 1 angeordneten Fluidreservoiren 8 (nur exemplarisch beziffert). In den Figuren 2 bis 4 ist die Mikrotiterplatte 1 unterhalb des Mikrofluidikchips 2 dargestellt. In der Praxis wird aber der Mikrofluidikchip 2 unterhalb der Mikrotiterplatte 1 angeordnet.

Da die Deckelungsfolie 6 in dem schmaleren Bereich 5 als Membran 12 für die Steuerungselemente 9 (nur exemplarisch beziffert) dient, muss die Deckelungsfolie 6 entsprechende mechanische Eigenschaften insbesondere hinsichtlich Verformbarkeit aufweisen. Hinter dem größeren passiven funktionellen Bereich 10, den die Deckelungsfolie 11 abdeckt, liegen mikrofluidische Kanäle (nicht gezeigt), welche unter anderem in die Reaktionskammern (Wells) 13 (nur exemplarisch beziffert) der darüber angeordneten Mikrotiterplatte 1 führen.

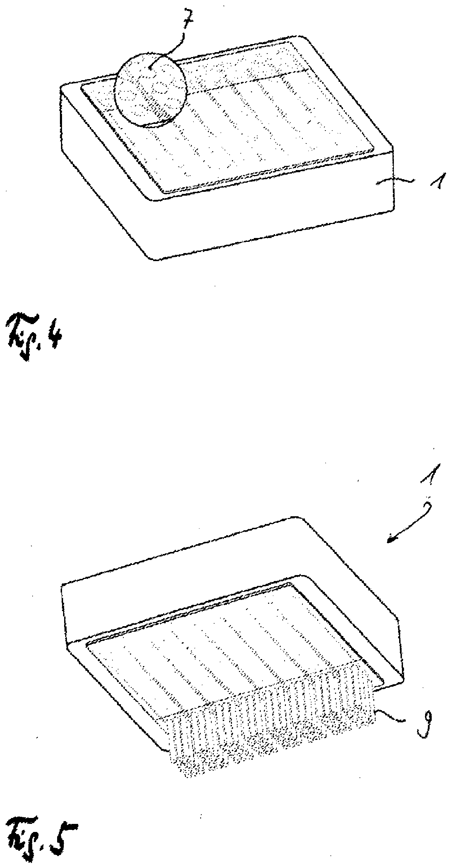

Die Anordnung der Membranflächen 12 und der Steuerungselemente 9 des Pneumatikadapters 16, der mittels einer entsprechenden Einspannvorrichtung an den Mikrofluidikchip 1 gepresst wird und die individuelle Ansteuerung jeder einzelnen Membran über eine Pneumatikleitung der Steuerungselemente 9 erlaubt, ist in der Figur 5 gezeigt.

In diesem Anwendungsbeispiel besteht der Ausdehnungsbegrenzer 3 aus einem dünnen gelochten Stahlblech - oder alternativ einer entsprechenden Kunststofffolie -, dessen äußere Abmessungen denen der Deckelungsfolie 6 entsprechen und auf dem die Positionen der als Löcher ausgebildeten Öffnungen 17 (nur exemplarisch beziffert) mit der Lage der Ventile 7 im Mikrofluidikchip 2 korrespondieren. Die Anbringung des Ausdehnungsbegrenzers 3 auf der Unterseite 14 der Deckelungsfolie 6 erfolgt hier mit einem entsprechend strukturierten, sehr dünnen Klebefilm 15. Der Klebefilm ist so ausgelegt, dass er die einzelnen Löcher an den Lochpositionen 13 und jeweils korrespondierenden Ventile 7 luftdicht voneinander isoliert.

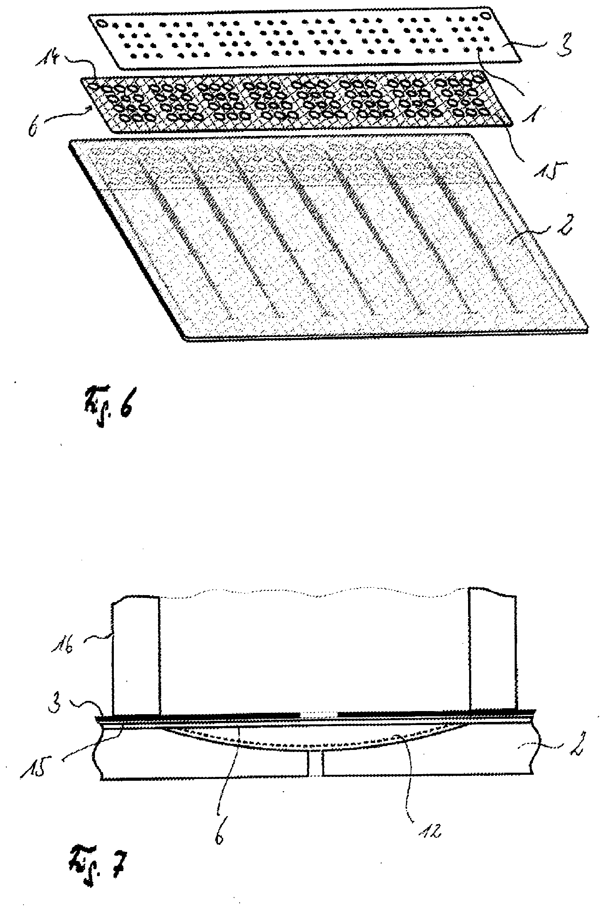

Die Wirkung des Ausdehnungsbegrenzers 3 besteht primär darin, dass er jede unerwünschte Ausdehnung der als Membran 12 ausgebildeten Deckelungsfolie 6 verhindert und es zu keinen undefinierten Veränderungen der Membrangeometrie, wie z.B. Aussackungen, kommen kann. In der in Figur 7 gezeigten Position kann sich die Membran 12 nur nach unten bewegen. Die Ausdehnung nach oben wird durch den Ausdehnungsbegrenzer 3 verhindert. Dadurch ist eine hohe volumetrische Genauigkeit des fluidischen Systems gewährleistet. Darüber hinaus entlastet der Ausdehnungsbegrenzer 3 die Verbindung zwischen der Deckelungsfolie 6 und dem Boden des Mikrofluidikchips 2 von mechanischem Stress, wodurch das Risiko von Ablösungen der Deckelungsfolie 6 wirksam unterbunden wird.

## Patentansprüche

1. Mikrofluidikchip (2) mit einem funktionellen Bereich (5), der mit einem flexiblen oder verformbaren Deckel (6) abgedeckt ist, ***dadurch gekennzeichnet, dass*** der Deckel (6) einen Ausdehnungsbegrenzer (3) aufweist.

2. Mikrofluidikchip nach Anspruch 1, ***dadurch gekennzeichnet, dass*** der Ausdehnungsbegrenzer (3) eine stabile Platte mit einer oder mehreren Öffnungen (17) ist.

3. Mikrofluidikchip nach Anspruch 1 oder 2, ***dadurch gekennzeichnet, dass*** der Ausdehnungsbegrenzer (3) mit dem Deckel (6) fest verbunden ist.

4. Mikrofluidikchip nach einem der vorhergehenden Ansprüche, ***dadurch gekennzeichnet, dass*** der Ausdehnungsbegrenzer (3) am Deckel (6) angeklebt ist.

5. Mikrofluidikchip nach einem der vorhergehenden Ansprüche, ***dadurch gekennzeichnet, dass*** der Deckel (6) mit dem funktionellen Bereich (5) fest verbunden ist.

6. Mikrofluidikchip nach einem der vorhergehenden Ansprüche, ***dadurch gekennzeichnet, dass*** der Deckel (6) am funktionellen Bereich (5) angeklebt ist.

7. Mikrofluidikchip nach einem der vorhergehenden Ansprüche, ***dadurch gekennzeichnet, dass*** der Deckel eine Membran (12) oder eine Folie aufweist.

8. Mikrofluidikchip nach einem der vorhergehenden Ansprüche, ***dadurch gekennzeichnet, dass*** er unterschiedliche aktive und/oder passive funktionelle Bereiche (5, 10) aufweist, die jeweils von unterschiedlichen Deckeln (6, 11) abgedeckt sind.

9. Mikrofluidikchipsystem mit einem Mikrofluidikchip nach einem der vorhergehenden Ansprüche, ***dadurch gekennzeichnet, dass*** der funktionelle Bereich (5) mikrofluidische Steuerungselemente (9) aufweist.

10. Mikrofluidikchipsystem nach Anspruch 9, ***dadurch gekennzeichnet, dass*** am Mikrofluidikchip (2) ein Pneumatikadapter (16) angeordnet ist.
